# EUROPÄISCHE PATENTSCHRIFT

(11) **EP 2 059 771 B1**
(45) Veröffentlichungstag und Bekanntmachung des Hinweises auf die Patenterteilung: **01.03.2017**
(21) Anmeldenummer: 07803122.6
(22) Anmeldetag: 31.08.2007
(51) Int. Cl.: G01F 1/58

(54) **MAGNETISCH-INDUKTIVES DURCHFLUSSMESSGERÄT**
APPARATUS FOR MEASURING THE VOLUMETRIC AND MASS FLOW OF A MEDIUM IN A PIPELINE
L'INVENTION CONCERNE UN DISPOSITIF DE MESURE DU DÉBIT VOLUMÉTRIQUE ET DU FLUX DE MATIÈRE D'UN FLUIDE DANS UNE CANALISATION

(30) Priorität: 05.09.2006 DE 102006042062
(43) Veröffentlichungstag der Anmeldung: 20.05.2009
(73) Patentinhaber: Endress + Hauser Flowtec AG, 4153 Reinach (CH)
(72) Erfinder: MAGLIOCCA, Antonio, CH-4055 Basel (CH); STÜNZI, Alexander, CH-4107 Ettingen (CH); GRAF, Oliver, CH-4447 Känerkinden (CH)
(74) Vertreter: Andres, Angelika Maria
(86) Internationale Anmeldenummer: PCT/EP2007/059135
(87) Internationale Veröffentlichungsnummer: WO 2008/028872

(56) Entgegenhaltungen:
- EP-A- 1 519 160
- DE-A1- 2 332 594
- DE-A1- 10 340 056
- DE-A1-102005 003 332
- DE-C- 612 609
- US-A- 4 098 118
- US-A- 4 253 340
- US-A- 4 422 339

## Beschreibung

Die Erfindung betrifft eine Vorrichtung zum Messen des Volumen- oder Massestroms eines Mediums in einer Rohrleitung, wobei das Medium das Messrohr in Richtung der Messrohrachse durchfließt, mit einem Messrohr, das in Strömungsrichtung des Mediums einen ersten Endbereich und einem zweiten Endbereich aufweist, mit einem Magnetsystem, das ein das Messrohr durchsetzendes, im wesentlichen quer zur Messrohrachse verlaufendes Magnetfeld erzeugt, mit zumindest einer mit dem Medium gekoppelten Messelektrode, die in einem Bereich des Messrohres angeordnet ist, und mit einer Regel-/Auswerteeinheit, die anhand der in die zumindest eine Messelektrode induzierten Messspannung Information über den Volumen- oder Massestrom des Mediums in dem Messrohr liefert. Kurz gesagt, betrifft die Erfindung ein magnetisch-induktives Durchflussmessgerät.

Magnetisch-induktive Durchflussmessgeräte nutzen für die volumetrische Strömungsmessung das Prinzip der elektrodynamischen Induktion aus: Senk-recht zu einem Magnetfeld bewegte Ladungsträger des Mediums induzieren in gleichfalls im wesentlichen senkrecht zur Durchflussrichtung des Mediums angeordnete Messelektroden eine Messspannung. Die in die Messelektroden induzierte Messspannung ist proportional zu der über den Querschnitt des Messrohres gemittelten Strömungsgeschwindigkeit des Mediums; sie ist also proportional zum Volumenstrom. Ist die Dichte des Mediums bekannt, lässt sich der Massestrom in der Rohrleitung bzw. in dem Messrohr bestimmen. Die Messspannung wird üblicherweise über ein Messelektrodenpaar abgegriffen, das in dem Bereich maximaler Magnetfeldstärke angeordnet ist und wo folglich die maximale Messspannung zu erwarten ist. Die Messelektroden selbst sind mit dem Medium entweder galvanisch oder kapazitiv gekoppelt.

Üblicherweise werden magnetisch-induktive Durchflussmessgeräte über Flansche an der Rohrleitung, in der der Volumenstrom des Mediums bestimmt werden soll, montiert. Bei den Flanschverbindungen handelt es sich um geschweißte Rohr-Flanschverbindungen, um Losflansch-Verbindungen oder um Wafer, die zwischen zwei an der Rohrleitung befestigten Flanschen montiert werden. Während also bei den ersten beiden Ausgestaltungen die Flansche in den Endbereichen des Messrohres des magnetisch-induktiven Durchflussmessgeräts fixiert sind, sind die Flansche bei der Üblicherweise werden magnetisch-induktive Durchflussmessgeräte über Flansche an der Rohrleitung, in der der Volumenstrom des Mediums bestimmt werden soll, montiert. Bei den Flanschverbindungen handelt es sich um geschweißte Rohr-Flanschverbindungen, um Losflansch-Verbindungen oder um Wafer, die zwischen zwei an der Rohrleitung befestigten Flanschen montiert werden. Während also bei den ersten beiden Ausgestaltungen die Flansche in den Endbereichen des Messrohres des magnetisch-induktiven Durchflussmessgeräts fixiert sind, sind die Flansche bei der dritten Ausgestaltung an der Rohrleitung montiert; über Spannverschraubungen wird der Wafer zwischen den Flanschen der Rohrleitung montiert.

Die Patentschrift US4098118 hingegen zeigt ein magnetisch-induktives Durchflussmessgerät mit einem Messrohr mit Flanschen, welches Messrohr in einem Spritzgussverfahren hergestellt ist.

Bei geschweißten Rohr-Flanschverbindungen werden die Flansche auf die beiden Rohrenden aufgeschoben und in der gewünschten Position angeschweißt. Anschließend wird das Rohr gewaschen, in den Flansch-bereichen geglättet und zwecks Korrosionsschutz verzinkt. Es folgt dann die Auskleidung des Messrohrs mit einem Liner. Damit eine hochwertige Verbindung zwischen den Flanschen und dem Messrohr erreicht wird, ist der Innendurchmesser eines Flansches innerhalb enger

Toleranzgrenzen auf den Außendurchmesser des Messrohres abzustimmen. Da bei dieser bekannten Lösung relativ enge Toleranzgrenzen bei den Flanschen und den Rohren eingehalten werden müssen, sind die Materialkosten relativ hoch. Darüber hinaus müssen Flansche und Messrohr aus verschweißbaren Materialien gefertigt sein.

Ähnlich verläuft die Fertigung von Wafern. Wafer sind Messgeräte, die keine Flansche haben. Bei der bekannten Herstellung von Wafern werden an das Messrohr abgekantete Endstücke angeschweißt. Die Abkantung wird beispielsweise über ein Tiefziehverfahren oder über ein Bördelverfahren dienen die gebördelten Endbereiche des Messrohres als axiale Anschlagflächen für Losflansche. Über die Losflansche wird das Messrohr in der Rohrleitung befestigt. Die Fertigung der Losflansch-Version erfolgt erfindungsgemäß dadurch, dass die Losflansche über das Messrohr geschoben werden; anschließend werden die beiden Endbereiche des Messrohrs gebördelt. Besonders vorteilhaft ist es bei der Version mit Losflanschen, dass das magnetisch-induktive Durchflussmessgerät in jeder beliebigen Winkelposition in der Rohrleitung montiert werden kann. Als Vorteil gegenüber der Ausgestaltung, die über Festflansche in der Rohrleitung fixiert ist, zeichnet sich die Ausgestaltung mit Losflanschen auch dadurch aus, dass die Flansche und das Messrohr aus unterschiedlichsten Materialien gefertigt sein können, so dass eine optimale Anpassung an die jeweilige Applikation problemlos möglich ist.

Eine zweite vorteilhafte Ausgestaltung sieht vor, dass die gebördelten Endbereiche des Messrohres an Flanschen montierbar sind, die an der Rohrleitung befestigt sind. Hier handelt es sich also um ein als Wafer ausgebildetes magnetisch-induktives Durchflussmess-gerät. Bei dieser Ausgestaltung müssen also lediglich die beiden Endbereiche des Messrohrs gebördelt werden.

Weiterhin ist im Zusammenhang mit der erfindungsgemäßen Vorrichtung vorgesehen, dass das Messrohr mit einem Liner ausgekleidet ist, wobei sich der Liner auch zumindest auf Teilbereiche der gebördelten Endbereiche des Messrohres erstreckt. Als Liner lassen sich alle üblichen Materialien verwenden. Wiederum kann der Liner optimal an die jeweilige Applikation angepasst sein.

Die Erfindung wird anhand der nachfolgenden Figuren näher erläutert. Es zeigt:
Fig. 1: eine perspektivische Skizze einer Ausgestaltung der erfindungs-gemäßen Vorrichtung mit Losflanschen,
Fig. 2: eine perspektivische Skizze einer Ausgestaltung der erfindungsgemäßen Vorrichtung mit Losflanschen, die aus Blech gepresst sind,
Fig. 3: einen Längsschnitt durch eine bevorzugte Ausgestaltung der erfindungsgemäßen Vorrichtung mit Losflanschen,
Fig. 3a: eine Darstellung des Ausschnitts A aus Fig. 3 und
Fig. 4: eine schematische Darstellung einer als Wafer ausgestalteten Variante.

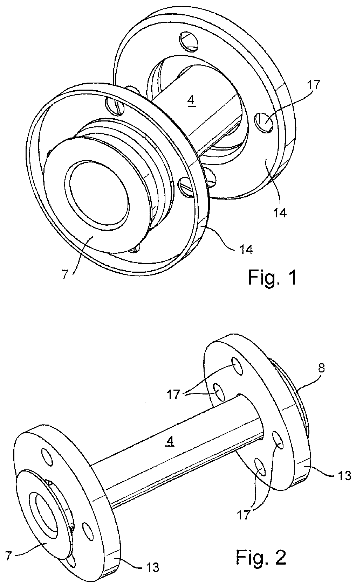

Fig. 1 zeigt eine perspektivische Skizze einer Ausgestaltung eines erfindungsgemäßen Sensors 2 mit Losflanschen 13. In Fig. 2 ist eine perspektivische Skizze einer Ausgestaltung des erfindungsgemäßen Sensors 2 mit losen Flanschen 14 zu sehen, die die aus Blech gepresst sind. In beiden Fällen werden die Flansche 13, 14 auf das Messrohr 4 aufgeschoben; anschließend werden die beiden Endbereiche 7, 8 des Messrohres gebördelt. Die gebördelten Endbereiche 7, 8 dienen beim in der Rohrleitung 12 montierten magnetisch-induktiven Durchflussmessgerät 1 als axiale Anschlagflächen.

Die Flansche 13, 14 zeichnen sich dadurch aus, dass sie aufgrund der relativ großen zulässigen Toleranzgrenzen kostengünstiger sind als angeschweißte Flansche. Ein weiterer Vorteil der erfindungsgemäßen Losflansch-Version ist darin zu sehen, dass die Flansche aus einem beliebigen Material gefertigt sein können. Darüber hinaus lässt sich das Durchflussmessgerät 1 in jeder beliebigen Winkelstellung an der Rohrleitung 12 montieren, so dass die Anforderungen an die Positionierung der Bohrungen an den Flanschen 13, 14 relativ gering sein können. Insgesamt stellt die erfindungsgemäße Lösung somit eine sehr kostengünstige Lösung dar.

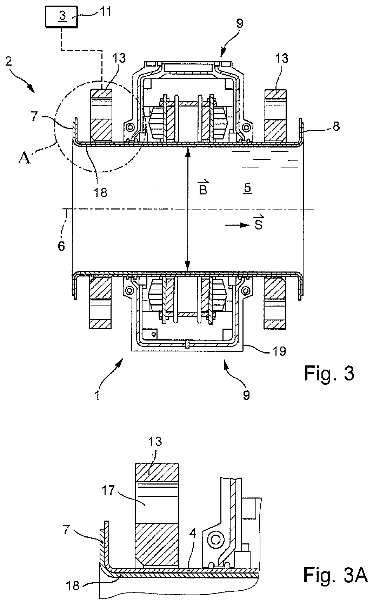

In Fig. 3 ist ein Längsschnitt durch eine bevorzugte Ausgestaltung der erfindungsgemäßen Vorrichtung mit Losflanschen 13 dargestellt. Fig. 3a zeigt eine vergrößerte Darstellung des Ausschnitts A aus Fig. 3. Die beiden Losflansche 13 sind verschiebbar auf dem Messrohr 4 angeordnet. Die Endbereiche 7, 8 des Messrohrs 4 sind gebördelt. Das Messrohr 4 ist mit einem Liner 18 ausgekleidet. Der Liner 18 erstreckt sich in die abgekanteten Endbereiche 7, 8.

Am Außenumfang des Messrohrs 4 ist das Magnetsystem 9 zur Erzeugung des Magnetfeldes B angebracht. Üblicherweise handelt es sich bei dem Magnetsystem 9 um zwei diametral angeordnete Elektromagnete, die über die Regel-/Auswerteeinheit 11 so angesteuert werden, dass sie ein periodisch die Richtung wechselndes Magnetfeld B erzeugen. Die Regel-/Auswerteeinheit 11 ist im Transmitter 3 angeordnet. Die Messelektroden 10 sind in dem Längsschnitt nicht sichtbar. Sie sind üblicherweise diametral in einer Ebene angeordnet, die senkrecht zu dem Magnetfeld B ausgerichtet ist.

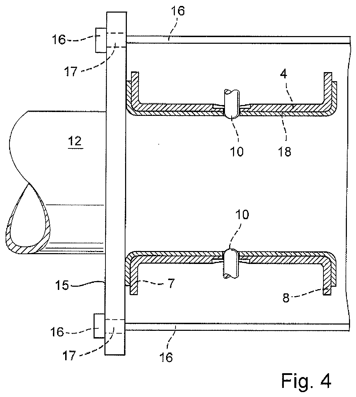

Fig. 4 zeigt eine schematische Darstellung einer als Wafer ausgestalteten Variante . Auch hier sind die End-bereiche 7, 8 des Messrohrs 4 gebördelt. Das Messrohr 4 ist mit einem beliebigen Liner 18 ausgekleidet. Der Liner 18 bedeckt teilweise die Oberflächen der beiden abgekanteten Endstücke 7, 8, die im montierten Zustand den Flanschen 15 zugewandt sind. Über die Befestigungsvorrichtung 16, 17 ist der Wafer zwischen zwei Flanschen 15 - in der Fig.4 ist nur einer der beiden Flansche 15 gezeigt - eingspannt. Die beiden Flansche 15 sind fest an der Rohrleitung 12 montiert.

### Bezugszeichenliste

1 magnetisch-induktives Durchflussmessgerät
2 Sensor
3 Transmitter
4 Messrohr
5 Mediums
6 Messrohrachse
7 erster gebördelter Endbereich
8 zweiter gebördelter Endbereich
9 Magnetsystem
10 Messelektrode
11 Regel-/Auswerteeinheit
12 Rohrleitung
13 Losflansch
14 aus Blech gepresster Losflansch
15 Flansch an Rohrleitung
16 Verbindungsteil
17 Bohrung
18 Liner
19 Gehäuse

## Patentansprüche

1. Vorrichtung zum Messen des Volumen- oder Massestroms eines Mediums (5) in einer Rohrleitung (12), mit einem Messrohr (4) und zwei Losflanschen (13, 14) , das das Medium (5) in Richtung der Messrohrachse (3) durchströmt, wobei das Messrohr (4) in Strömungsrichtung (S) des Mediums (5) einen ersten Endbereich (7) und einem zweiten Endbereich (8) aufweist, mit einem Magnetsystem (9), das ein das Messrohr (4) durchsetzendes, im wesentlichen quer zur Messrohrachse verlaufendes Magnetfeld (B) erzeugt, mit zumindest einer mit dem Medium (5) gekoppelten Messelektrode (10), die in einem im wesentlichen senkrecht zum Magnetfeld liegenden Bereich des Messrohres (4) angeordnet ist, und mit einer Regel-/Auswerteeinheit (11), die anhand der in die zumindest eine Messelektrode (10) induzierten Messspannung (*Uᵢ*) Information über den Volumen- oder Massestrom des Mediums (5) in dem Messrohr (4) liefert,
wobei das Messrohr (4) einstückig ausgestaltet ist und
dass der erste Endbereich (7) und der zweite Endbereich (8) des Messrohres (4) gebördelt sind und wobei jeweils ein Losflansch im ersten Endbereich und jeweils ein Losflansch im zweiten Endbereich angeordnet ist,
**dadurch gekennzeichnet,**
**dass** die gebördelten Endbereiche (7, 8) des Messrohres (4) als axiale Anschlagflächen für die Losflansche (13, 14) dienen, über die das Messrohr (4) in der Rohrleitung (12) befestigbar ist.

2. Vorrichtung nach Anspruch 1,
**dadurch gekennzeichnet,**
**dass** das Messrohr (4) mit einem Liner (18) ausgekleidet ist, wobei sich der Liner (18) auch zumindest auf Teilbereiche der gebördelten Endbereiche (7, 8) des Messrohres (4) erstreckt.

3. Vorrichtung nach Anspruch 2,
**dadurch gekennzeichnet,**
**dass** die Flansche (13, 14) und das Messrohr (4) aus verschiedenen Materialien gefertigt sind.

## Claims

1. Device designed to measure the volume flow or mass flow of a medium (5) in a pipe (12) with a measuring tube (4) and two lap-joint flanges (13, 14) through which the medium (5) flows in the direction of the measuring tube axis (3), wherein, in the flow direction (S) of the medium (5), the measuring tube (4) has a first end section (7) and a second end section (8), with a magnetic system (9), which generates a magnetic field (B) that passes through the measuring tube (4) and is essentially perpendicular to the measuring tube axis, with at least one measuring electrode (10) that is coupled with the medium (5), said measuring electrode being arranged in an area of the measuring tube (4) that is essentially perpendicular to the magnetic field, and with a control/evaluation unit (11) which uses the measuring voltage (*Uᵢ*) induced in the at least one measuring electrode (10) to deliver information about the volume flow or mass flow of the medium (5) in the pipe (4),
wherein the measuring tube (4) is designed as one piece and
wherein the first end section (7) and the second end section (8) of the measuring tube (4) is flanged and wherein one lap-joint flange is arranged in the first end section and one lap-joint flange is arranged in the second end section,
**characterized in that**
the flanged end sections (7, 8) of the measuring tube (4) serve as axial stop surfaces for the lap-joint flanges (13, 14) via which the measuring tube (4) can be fixed in the pipe (12).

2. Device as claimed in Claim 1,
**characterized in that**
the measuring tube (4) is lined with a liner (18), wherein the liner (18) also extends at least to subsections of the flanged end sections (7, 8) of the measuring tube (4).

3. Device as claimed in Claim 2,
**characterized in that**
the flanges (13, 14) and the measuring tube (4) are made from different material.

## Revendications

1. Dispositif destiné à la mesure du débit volumique ou massique d'un produit (5) dans une conduite, avec un tube de mesure (4) et deux brides tournantes (13, 14), lequel produit (5) s'écoule en direction de l'axe de tube de mesure (3), le tube de mesure (4) présentant, dans le sens d'écoulement (S) du produit (5), une première partie d'extrémité (7) et une deuxième partie d'extrémité (8), avec un système magnétique (9), qui génère un champ magnétique (B) traversant le tube de mesure (4), pour l'essentiel perpendiculairement à l'axe de tube de mesure, avec au moins une électrode de mesure (10) couplée avec le produit (5), laquelle électrode est disposée dans une zone du tube de mesure (4) pour l'essentiel perpendiculaire au champ magnétique, et avec une unité de régulation / d'exploitation (11), qui fournit, sur la base de la tension de mesure induite (*Uᵢ*) dans l'au moins une électrode de mesure (10), une information sur le débit volumique ou massique du produit (5) s'écoulant dans la conduite (4),
le tube de conduite (4) étant conçu en une seule pièce et
la première partie d'extrémité (7) et la deuxième partie d'extrémité (8) du tube de mesure (4) étant repliées et une bride tournante étant disposée dans la première partie d'extrémité et une autre bride tournante étant disposée dans la deuxième partie d'extrémité,
**caractérisé**
**en ce que** les parties d'extrémité (7, 8) repliées du tube de mesure (4) servent de surfaces de butée axiales pour les brides tournantes (13, 14), par l'intermédiaire desquelles le tube de mesure (4) peut être fixé dans la conduite (12).

2. Dispositif selon la revendication 1,
**caractérisé**
**en ce que** le tube de mesure (4) est revêtu avec un liner (18), le liner (18) s'étendant également au moins sur des zones partielles des parties d'extrémité (7, 8) repliées du tube de mesure (4).

3. Dispositif selon la revendication 2,
**caractérisé**
**en ce que** les brides (13, 14) et le tube de mesure (4) sont constitués de matériaux différents.
